# EUROPÄISCHE PATENTSCHRIFT

(11) **EP 1 862 677 B1**
(45) Veröffentlichungstag und Bekanntmachung des Hinweises auf die Patenterteilung: **27.01.2010**
(21) Anmeldenummer: 07108742.3
(22) Anmeldetag: 23.05.2007
(51) Int. Cl.: F16B 1/00, F16B 25/00

(54) **Gewindefurchende Schraube**
Thread moulding screw
Vis autotaraudeuse

(30) Priorität: 02.06.2006 DE 102006000269
(43) Veröffentlichungstag der Anmeldung: 05.12.2007
(73) Patentinhaber: HILTI Aktiengesellschaft, 9494 Schaan (LI)
(72) Erfinder: Wieser, Jürgen, 86916 Kaufering (DE); Dobler, Johannes, 6830 Rankweil (AT)
(74) Vertreter: Wildi, Roland

(56) Entgegenhaltungen:
- DE-A1- 2 521 555
- DE-A1- 10 108 867

## Beschreibung

Die Erfindung betrifft eine gewindefurchende Schraube, der im Oberbegriff des Patentanspruchs 1 genannten Art.

Schrauben mit einem selbstfurchenden Gewinde sind für verschiedenste Untergründe bekannt. Aus der DE 33 01 414 A1 ist eine gewindefurchende Schraube für mineralische Untergründe, wie z. B. Beton mit einem Schaft, der ein erstes Ende und ein gegenüberliegendes zweites Ende mit einem Lastangriffsmittel aufweist, und einem Gewinde bekannt, das sich zumindest bereichsweise über die Länge des Schafts erstreckt.

Die gewindefurchende Schraube wird in ein vorgebohrtes Loch in den Untergrund mittels eines geeigneten Werkzeugs, wie z. B. eines Schraubers, Bohrhammers, Schraubenschlüssels oder dergleichen eingedreht, wobei der Gewindeanfang der Schraube ein dem Gewinde entsprechendes Gegengewinde in den Untergrund furcht. In das Gegengewinde greift das nachfolgende Gewinde ein, womit die Last in den Untergrund übertragen wird. In einen weichen Untergrund, wie z. B. Porenbeton oder Gipskarton können gewindefurchende Schrauben auch direkt ohne Vorbohren in den weichen Untergrund eingeschraubt werden.

Ein wesentlicher Vorteil von gewindefurchenden Schrauben ist die Möglichkeit, diese wieder aus dem Untergrund herauszuschrauben, ohne dass Teile der geschaffenen Befestigung im Untergrund verbleiben. Insbesondere gewindefurchende Betonschrauben, die in mineralische Untergründe gesetzt werden, haben sich für temporäre Befestigungen beispielsweise beim Schalungsbau, beim Gerüstbau oder beim Festlegen von Bohr- und Schneidwerkzeugen in der Diamant-Bohr- und Trenntechnik in der Praxis bewährt. Die gewindefurchenden Schrauben sind nicht nur demontierbar, sondern prinzipiell auch für eine erneute Verwendung nutzbar.

Nachteilig an der bekannten Lösung ist, dass eine gewindefurchende Schraube, insbesondere wenn diese in mineralische Untergründe gesetzt wird, einem Verschleiss unterliegt. Der Grad des Verschleisses und somit die Abnutzung der Gewindeflanken des Gewindes sind von den örtlichen Gegebenheiten im Untergrund abhängig und können in Bezug auf ein mehrfaches Setzen der gewindefurchenden Schraube nicht vorhergesagt werden. Daher können bei den bekannten gewindefurchenden Schrauben die Lasteigenschaften nur bei einer Erstanwendung garantiert werden. Daher wird auch bei temporären Befestigungen für jeden neuen Setzvorgang eine neue gewindefurchende Schraube verwendet und der mögliche Vorteil der Wiederverwendbarkeit nicht genutzt.

Aufgabe der Erfindung ist es, eine selbstfurchende Schraube, insbesondere Betonschraube, zu schaffen, die mehrmals verwendbar ist und eine Beurteilung des Tragverhaltens erlaubt.

Die Aufgabe ist durch die Merkmale des unabhängigen Anspruchs gelöst. Vorteilhafte Weiterbildungen sind in den Unteransprüchen dargelegt.

Aus der DE 25 21 555 A1 ist eine gewindefurchende Schraube mit einem Schaft, der ein erstes Ende und ein gegenüberliegendes zweites Ende mit einem Lastangriffsmittel aufweist, und einem Gewinde bekannt, das sich zumindest bereichsweise über die Länge des Schafts erstreckt. Für eine verbesserte Setzbarkeit der gewindefurchenden Schraube sind an den Spitzen des Gewindegangs mehrere zueinander beabstandete Einschnitte vorgesehen.

Aus der DE 101 08 867 A1 ist eine mehrfach verwendbare Anschlussschraube für Zug- bzw. Spannstränge, deren Gewinde mit einer Markierung in Form einer in das Gewindeprofil eingearbeiteten Nut. Rille oder Mulde als Verschleissindikatormittel der Schraube versehen ist.

Gemäss der Erfindung ist zumindest ein ein in dem Gewinde angeordneter, separater Verschleisskörper als Verschleissindikatormittel an dem Gewinde vorgesehen.

Das zumindest eine Verschleissindikatormittel zeigt den Abnutzungsgrad des Gewindes an und erlaubt dadurch eine Aussage über die Last- beziehungsweise Trageigenschaften einer demontierten gewindefurchenden Schraube. Der Anwender kann einfach und klar an der demontierten gewindefurchenden Schraube erkennen, ob eine definierte Grenze der Tragfähigkeit der gewindefurchenden Schraube unterschritten ist und ob er diese wiederverwenden kann oder nicht. Durch die mehrfache Verwendung der gewindefurchenden Schraube lassen sich insbesondere bei temporären Befestigungen Kosten sowie Ressourcen z. B. in der Lagerhaltung und in der Logistik einsparen.

Der separate Verschleisskörper ist z. B. in Form von Stiften, Kugeln, Würfeln, Kegeln oder dergleichen ausgebildet und wird beispielsweise bei der Fertigung der gewindefurchenden Schraube im Gewinde eingebettet. Bei Erreichen eines vorbestimmten Abnutzungsgrads wird der Verschleisskörper freigelegt. Aufgrund des optisch wahrnehmbaren Verschleisskörpers erkennt ein Anwender, dass die untere Tragfähigkeitsgrenze der gewindefurchenden Schraube unterschritten wurde.

In einer alternativen Ausführungsform wird der separate Verschleisskörper in eine Ausnehmung im Gewinde reib- oder formschlüssig eingesetzt, wobei z. B. bei einer vollständigen Abnutzung des Verschleisskörpers dem Anwender das Unterschreiten der unteren Tragfähigkeitsgrenze der gewindefurchenden Schraube angezeigt wird.

Vorzugsweise verläuft zumindest eine Seite einer Gewindeflanke des Gewindes diskontinuierlich von einer Gewindespitze zu einem Gewindegrund, wobei der Bereich der Diskontinuität das zumindest eine Verschleissindikatormittel ausbildet. Der Bereich der Diskontinuität der Gewindeflanke ist beispielsweise als Absatz ausgebildet. Alternativ ist Bereich der Diskontinuität der Gewindeflanke durch einen Knick ausgebildet, dessen benachbarte Flankenabschnitte beispielsweise einen stumpfen oder überstumpfen Winkel einschliessen. Weiter kann der Bereich der Diskontinuität der Gewindeflanke durch eine im Wesentlichen parallel zum freien Rand der Gewindeflanke verlaufende Vertiefungen, beispielsweise in Form einer umlaufenden Nut gebildet sein. Es können auch an beiden Seiten der Gewindeflanken jeweils ein Absatz, ein Knick und/oder eine Nut vorgesehen sein.

Weiter können auch auf einer Seite der Gewindeflanke mehr als ein Absatz, Knick und/oder mehr als eine Nut vorgesehen sein.

Bevorzugt ist das zumindest eine Verschleissindikatormittel eine im Gewinde angeordnete Ausnehmung, welche für den Anwender deutlich sichtbar ist. Die Ausnehmung ist derart dimensioniert und positioniert, dass bei einem abrasiven Verschleiss des Gewindes, bei dem die Ausnehmung nicht mehr erkennbar ist, ein unterer Grenzwert der Tragfähigkeit der gewindefurchenden Schraube erreicht wird.

Vorzugsweise ist die Ausnehmung an einer Seite einer Gewindeflanke des Gewindes angeordnet. Vorteilhaft erstreckt sich die Ausnehmung von einer Spitze der Gewindeflanke ausgehend um einen definierten Betrag, der aufgrund der minimalen Tragfähigkeit bestimmt ist, die bei der gewindefurchenden Schraube mit dem abgenutzten Gewinde noch erreicht werden muss, in Richtung des Gewindegrundes. In einer weiteren Ausführungsform ist die Ausnehmung als umfänglich geschlossene Vertiefung ausgebildet, die in einem bestimmten Abstand zum äusseren Rand der Gewindeflanke angeordnet ist.

Bevorzugt ist ein Verschleissmittel in der Ausnehmung vorgesehen, das optisch wahrnehmbar ist. Vorteilhaft ist das Verschleissmittel aus einem Material gefertigt, das sich optisch von dem Werkstoff zur Herstellung der gewindefurchenden Schraube unterscheidet. Beispielsweise ist ein temporär fliessfähiges Verschleissmittel in die Ausnehmung eingegossen.

Vorzugsweise ist das zumindest eine Verschleissindikatormittel eine an der Gewindeflanke des Gewindes angeordnete Markierung, die beispielsweise als Farbbeschichtung oder als ein Bereich mit einer besonderen Oberflächenstruktur ausgebildet ist. Der Bereich mit der besonderen Oberflächenstruktur ist z. B. eine Profilierung, die vorteilhaft bei der Fertigung der gewindefurchenden Schraube am Gewinde ausgebildet wird.

Vorzugsweise ist mehr als ein Verschleissindikatormittel an einem Gewinde vorgesehen. Diese sind z. B. an verschiedenen Stellen zueinander beabstandet am Gewinde angeordnet, so dass in mehr als einem Bereich des Gewindes eine Aussage bezüglich der weiteren Verwendung einer demontierten gewindefurchenden Schraube möglich ist. Alternativ sind mehrere Verschleissindikatormittel in verschiedenen Abständen zum Rand der Gewindeflanke angeordnet, wodurch neben der unteren Tragfähigkeitsgrenze auch Zwischenstufen der Tragfähigkeit durch einen Anwender einfach optisch wahrnehmbar sind. Des Weiteren können auch verschiedene Arten von Verschleissindikatormitteln an einem Gewinde einer gewindefurchenden Schraube vorgesehen sein, was eine hohe Sicherheit bezüglich der Aussage zur verbleibenden Tragfähigkeit der gewindefurchenden Schraube gewährleist.

Die Erfindung wird nachstehend anhand von Ausführungsbeispielen näher erläutert. Es zeigen:
- Fig. 1: Eine Seitenansicht auf eine Schraube;
- Fig. 2: einen Teilschnitt gemäss Linie II-II in Fig. 1;
- Fig. 3: eine Ausführungsform der Erfindung im Teilschnitt;
- Fig.4: einen schematischen Schnitt durch eine Gewindeflanke einer zweiten Ausführungsform der Erfindung;
- Fig. 5: einen schematischen Schnitt durch eine Gewindeflanke einer dritte Ausführungsform der Erfindung;
- Fig.6: einen schematischen Schnitt durch eine Gewindeflanke mit zwei weiteren Ausführungsformen von weiteren Arten von Verschleissindikatormitteln der Erfindung.

Grundsätzlich sind in den Figuren gleiche Teile mit den gleichen Bezugszeichen versehen.

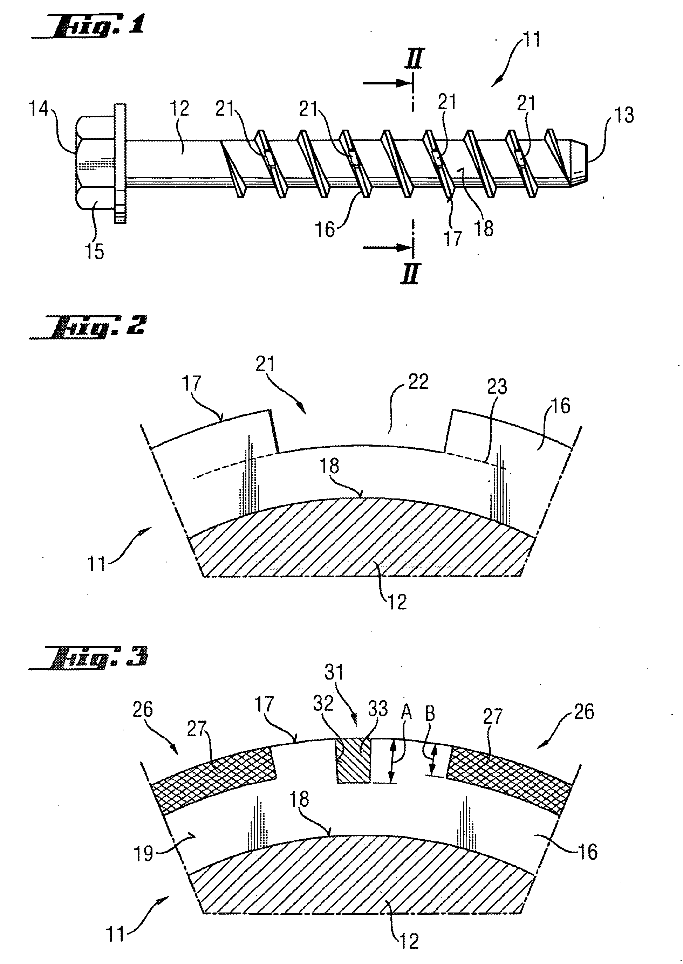

In den Figuren 1 und 2 ist eine gewindefurchende Schraube 11 mit einem Schaft 12, der ein erstes Ende 13 und ein gegenüberliegendes zweites Ende 14 mit einem Lastangriffsmittel 15 in Form eines Sechskantkopfes aufweist, und mit einem Gewinde 16 gezeigt, das sich bereichsweise über die Länge des Schafts 12 erstreckt. An dem Gewinde sind mehrere Verschleissindikatormittel 21 vorgesehen. Die Verschleissindikatormittel 21 sind im Gewinde 16 angeordnete Ausnehmungen 22, die sich vom Rand 17 des Gewindes 16 in Richtung des Gewindegrundes 18 erstrecken. Sind die Bereiche des Gewindes 16 neben der Ausnehmung 22 bis zur Linie 23 durch die Abnutzung beim Eindrehen der gewindefurchenden Schraube 11 z. B. in mineralischen Untergründen abgetragen, ist die Ausnehmung 22 als solche nicht mehr erkennbar. Dem Anwender wird dadurch optisch signalisiert, dass die untere Tragfähigkeitsgrenze der gewindefurchenden Schraube 11 unterschritten ist und diese für bestimmte Befestigungen nicht mehr wiederverwendet werden sollte.

In der Figur 3 sind zwei verschiedene, an einem Gewinde 16 angeordnete Verschleissindikatormittel 26 und 31 dargestellt. Das Verschleissindikatormittel 31 ist ebenfalls als eine Ausnehmung 32 ausgebildet, die jedoch an einer Seite 19 einer Gewindeflanke des Gewindes 16 angeordnet ist. Die Ausnehmung 32 erstreckt sich vom Rand 17 des Gewindes 16 um einen Betrag A in Richtung des Gewindegrundes 18. Des Weiteren ist die Ausnehmung 32 mit einem Verschleissmittel 33 verfüllt, das z. B. eine andere Farbe als der Werkstoff zur Herstellung der gewindefurchenden Schraube 11 aufweist.

Die anderen Arten von Verschleissindikatormittel 26 sind als eine Markierung 27 in Form einer besonderen Oberflächenprofilierung ausgebildet, die an der Seite 19 der Gewindeflanke des Gewindes 16 angeordnet ist. Die Markierung 27 erstreckt sich vom Rand 17 des Gewindes 16 um einen Betrag B in Richtung des Gewindegrundes 18, der kleiner als der Betrag A der Erstreckung der Ausnehmung 32 ist. Sind die Markierungen 27 durch den beim Eindrehen auftretenden Verschleiss der gewindefurchenden Schraube 11 vollständig abgetragen, wird dem Anwender signalisiert, dass die untere Tragfähigkeitsgrenze der gewindefurchenden Schraube 11 bald unterschritten wird. Somit bilden in diesem Ausführungsbeispiel die Verschleissindikatormittel 26 ein Vorwarnsystem aus.

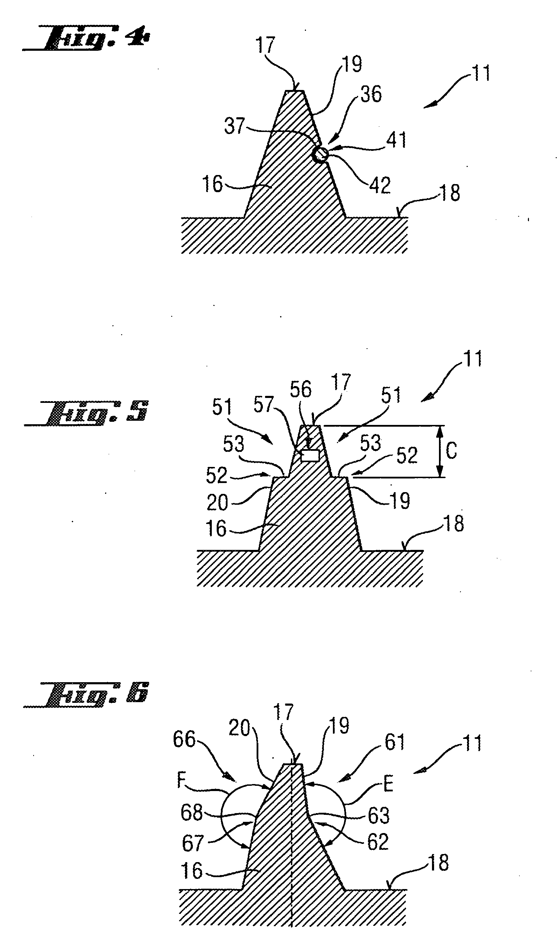

Figur 4 zeigt in einem schematischen Detailschnitt als Verschleissindikatormittel 36 eine zu dem Rand 17 der Gewindeflanke beabstandete und im Wesentlichen parallel zu diesem verlaufende Nut 37, die an der Seite 19 der Gewindeflanke des Gewindes 16 angeordnet ist. In der Nut 37 ist beispielsweise als ein weiteres Verschleissindikatormittel 41 ein separater Verschleisskörper 42 angeordnet, der als Kugel ausgebildet und in der Nut 37 festgelegt ist.

In der Figur 5 ist ein weiterer schematischer Detailschnitt gezeigt, wobei beide Seiten 19 und 20 der Gewindeflanke des Gewindes 16 diskontinuierlich von dem Rand 17 der Gewindeflanke zum Gewindegrund 18 verlaufen. Die Bereiche 52 der Diskontinuität werden durch zwei, im gleichen Abstand C zum Rand 17 des Gewindes 16 angeordnete Absätze 53 gebildet und bilden jeweils weitere Verschleissindikatormittel 51 aus.

Weiter ist im Gewinde 16 in einem Bereich zwischen den Absätzen 53 und dem Rand 17 des Gewindes 16 ein separater Verschleisskörper 57 als Verschleissindikatormittel 56 eingebettet.

In der Figur 6 ist ebenfalls ein schematischer Detailschnitt gezeigt, wobei beide Seiten 19 und 20 der Gewindeflanke des Gewindes 16 diskontinuierlich von dem Rand 17 der Gewindeflanke zum Gewindegrund 18 verlaufen. Der Bereich 62 der Diskontinuität auf der Seite 19 der Gewindeflanke des Gewindes 16 ist durch eine Kante 63 ausgebildet, die das weitere Verschleissindikatormittel 61 ausbildet. Die zur Kante 63 benachbarten Seitenabschnitte der Seite 19 der Gewindeflanke des Gewindes 16 schliessen einen stumpfen Winkel E ein. Der Bereich 67 der Diskontinuität auf der Seite 20 der Gewindeflanke des Gewindes 16 ist durch eine Kante 68 ausgebildet, die das Verschleissindikatormittel 66 ausbildet. Die zur Kante 68 benachbarten Seitenabschnitte der Seite 20 der Gewindeflanke des Gewindes 16 schliessen einen überstumpfen Winkel F ein. Ist bei einer demontierten gewindefurchenden Schraube 11 die Gewindeflanke des Gewindes 16 durch den beim Eindrehen auftretenden Verschleiss bis zu den Kanten 63 bzw. 68 abgetragen, erkennt ein Anwender, dass bei einer erneuten Verwendung die untere Tragfähigkeitsgrenze der gewindefurchenden Schraube 11 nicht mehr erreicht wird.

## Patentansprüche

1. Gewindefurchende Schraube mit einem Schaft (12), der ein erstes Ende (13) und ein gegenüberliegendes zweites Ende (14) mit einem Lastangriffsmittel (15) aufweist, und einem Gewinde (16), das sich zumindest bereichsweise über die Länge des Schafts (12) erstreckt, **dadurch gekennzeichnet, dass** zumindest ein in dem Gewinde (16) angeordneter, separater Verschleisskörper (42; 57) als Verschleissindikatormittel (21, 26, 31; 36, 41; 51, 56; 61, 66) an dem Gewinde (16) vorgesehen ist.

2. Schraube nach Anspruch 1, **dadurch gekennzeichnet, dass** zumindest eine im Gewinde (16) angeordnete Ausnehmung (22, 32; 37) vorgesehen ist und ein Verschleissmittel (33) in der Ausnehmung (32) vorgesehen ist.

3. Schraube nach Anspruch 2, **dadurch gekennzeichnet, dass** die Ausnehmung (32; 37) an einer Seite (19) einer Gewindeflanke des Gewindes (16) angeordnet ist.

4. Schraube nach einem der Ansprüche 1 bis 3, **dadurch gekennzeichnet, dass** mehr als ein Verschleissindikatormittel (21, 26, 31; 36, 41; 51, 56; 61, 66) an einem Gewinde (16) vorgesehen ist.

5. Schraube nach Anspruch 4, **dadurch gekennzeichnet, dass** verschiedene Arten von Verschleissindikatormitteln (21; 26, 31; 36; 51; 61, 66) an einem Gewinde (16) der gewindeformenden Schraube (11) vorgesehen sind.

6. Schraube nach Anspruch 5, **dadurch gekennzeichnet, dass** zumindest eine Seite (19, 20) einer Gewindeflanke des Gewindes (16), diskontinuierlich von einem Rand (17) des Gewindes (16) zu einem Gewindegrund (18) verläuft, wobei der Bereich (37; 52; 62, 67) der Diskontinuität als eine weitere Art eines Verschleissindikatormittels (36; 51; 61, 66) ausbildet.

7. Schraube nach Anspruch 5, **dadurch gekennzeichnet, dass** als weitere Art eines Verschleissindikatormittels (21, 31; 36) eine im Gewinde (16) angeordnete Ausnehmung (22, 32; 37) vorgesehen ist.

8. Schraube nach Anspruch 7, **dadurch gekennzeichnet, dass** die Ausnehmung (32; 37) an einer Seite (19) einer Gewindeflanke des Gewindes (16) angeordnet ist.

9. Schraube nach Anspruch 5, **dadurch gekennzeichnet, dass** als eine weitere Art eines Verschleissindikatormittels (26) eine an der Gewindeflanke des Gewindes (16) angeordnete Markierung (27) vorgesehen ist.

## Claims

1. Thread moulding screw with a shank (12), which has a first end (13) and a second end (14) opposite it with a means of applying load (15), and a thread (16), which extends over the length of the shank (12) at least in parts, **characterised in that** at least one separate wear body (42; 57) arranged in the thread (16) is provided on the thread (16) as a means of indicating wear (21, 26, 31; 36, 41; 51, 56; 61, 66).

2. Screw according to claim 1, **characterised in that** at least one recess (22, 32; 37) arranged in the thread (16) is provided and a means of indicating wear (33) is provided in the recess (32).

3. Screw according to claim 2, **characterised in that** the recess (32; 37) is arranged on one side (19) of a thread flank of the thread (16).

4. Screw according to one of claims 1 to 3, **characterised in that** more than one means of indicating wear (21, 26, 31; 36; 41; 51; 56; 61; 66) is provided on the thread (16).

5. Screw according to claim 4, **characterised in that** various types of means of indicating wear (21; 26, 31; 36; 51; 61; 66) are provided on a thread (16) of the thread forming screw (11).

6. Screw according to claim 5, **characterised in that** at least one side (19, 20) of a thread flank of the thread (16) runs discontinuously from an edge (17) of the thread (16) to a thread root (18), in which the area (37; 52; 62, 67) of discontinuity forms a further type of means of indicating wear (36; 51; 61, 66).

7. Screw according to claim 5, **characterised in that** a recess (22, 32; 37) arranged in the thread (16) is provided as a further type of means of indicating wear (21, 31; 36).

8. Screw according to claim 7, **characterised in that** the recess (32; 37) is arranged on one side (19) of a thread flank of the thread (16).

9. Screw according to claim 5, **characterised in that** a mark (27) arranged on the thread flank of the thread (16) is provided as a further type of a means of indicating wear (26).

## Revendications

1. Vis autotaraudeuse comprenant une tige (12), laquelle possède une première extrémité (13) et une seconde extrémité (14) opposée munie d'un moyen d'application de charge (15), et comprenant un filetage (16) qui s'étend au moins par endroits sur la longueur de la tige (12), **caractérisée en ce qu'**au moins un corps d'usure séparé (42 ; 57), disposé dans le filetage (16), est prévu sur le filetage (16) à titre de moyen indicateur d'usure (21, 26, 31 ; 36, 41 ; 51, 56 ; 61, 66).

2. Vis selon la revendication 1, **caractérisée en ce qu'**il est prévu au moins un évidement (22, 32 ; 37) ménagé dans le filetage (16) et **en ce qu'**un moyen d'usure (33) est prévu dans l'évidement (32).

3. Vis selon la revendication 2, **caractérisée en ce que** l'évidement (32 ; 37) est disposé sur un côté (19) d'un flanc de filet du filetage (16).

4. Vis selon une des revendications 1 à 3, **caractérisée en ce que** plus d'un moyen indicateur d'usure (21, 26, 31 ; 36, 41 ; 51, 56 ; 61, 66) est prévu sur le filetage (16).

5. Vis selon la revendication 4, **caractérisée en ce que** divers types de moyens indicateurs d'usure (21 ; 26, 31 ; 36 ; 51 ; 61, 66) sont prévus sur un filetage (16) de la vis autotaraudeuse (11).

6. Vis selon la revendication 5, **caractérisée en ce qu'**au moins un côté (19, 20) d'un flanc de filet du filetage (16) s'étend de manière discontinue depuis un bord (17) du filetage (16) jusqu'à un fond de filet (18), la zone (37 ; 52 ; 62, 67) de discontinuité étant conformée en un autre type de moyen indicateur d'usure (36 ; 51 ; 61, 66).

7. Vis selon la revendication 5, **caractérisée en ce qu'**un évidement (22, 32 ; 37) ménagé dans le filetage (16) est prévu à titre d'autre type de moyen indicateur d'usure (21, 31 ; 36).

8. Vis selon la revendication 7, **caractérisée en ce que** l'évidement (32 ; 37) est ménagé sur un côté (19) d'un flanc de filet du filetage (16).

9. Vis selon la revendication 5, **caractérisée en ce qu'**un marquage (27) disposé sur le flanc de filet du filetage (16) est prévu à titre d'autre type de moyen indicateur d'usure (26).
